# EUROPEAN PATENT APPLICATION

(11) **EP 4 502 996 A1**
(43) Date of publication of application: **05.02.2025**
(21) Application number: 23839767.3
(22) Date of filing: 28.04.2023
(51) Int. Cl.: G09F 9/30, G06F 1/16, H04M 1/02

(54) **FLEXIBLE DISPLAY ASSEMBLY AND ELECTRONIC DEVICE COMPRISING SAME**

(30) Priority: 15.07.2022 KR 20220087504; 11.08.2022 KR 20220100437
(71) Applicant: Samsung Electronics Co., Ltd., Suwon-si, Gyeonggi-do 16677 (KR)
(72) Inventor: BAE, Jaehyun, Suwon-si Gyeonggi-do 16677 (KR); KIM, Taejeong, Suwon-si Gyeonggi-do 16677 (KR); MOON, Youngmin, Suwon-si Gyeonggi-do 16677 (KR); PARK, Byounggyu, Suwon-si Gyeonggi-do 16677 (KR); LEE, Changsu, Suwon-si Gyeonggi-do 16677 (KR)
(74) Representative: Gulde & Partner
(86) International application number: PCT/KR2023/005892
(87) International publication number: WO 2024/014673

(57) **Abstract**

An electronic device may include: a flexible display comprising a flat area and a bending area, the bending area configured to move along a curved surface; and a supporting structure including a plurality of bars spaced apart from each other on a rear side of the bending area of the flexible display, wherein a width of a center portion of at least one bar from among the plurality of bars is larger than a width of an end portion of the at least one bar.

## Description

### [TECHNICAL FIELD]

Various embodiments of the disclosure relate to a flexible display assembly and an electronic device including the same.

### [BACKGROUND ART]

As electronic devices become slimmer and more design-oriented, efforts are being made to increase rigidity while also differentiating their functional elements. Electronic devices are evolving to have various shapes as well as their stereotypical rectangular shape. Electronic devices may have a transformable structure that allows for use of a larger display and ease to carry. A transformable structure in an electronic device may be, for example, a flexible display whose display area may be varied. The flexible display may be operated so that housings thereof are slidable with respect to each other by supporting each other. The flexible display may be implemented by, for example, a rollable structure or a slidable structure.

The rollable electronic device (or slidable electronic device) may be configured to allow the flexible display (or rollable display) to be rolled up or unrolled. The slidable electronic device may be configured such that the flexible display is slid to enlarge or shrink the screen.

The slidable electronic device may have a structure in which the housing moves in a sliding manner to extend or reduce the screen size by the flexible display. In the slidable electronic device, bars may be attached to the rear surface of the flexible display so that the flexible display is movable along the rail frame. The bars may be mounted to be movable on the rail frame. Some of the bars may bend due to the repulsive force generated in some sections while moving along the rail frame.

### [DETAILED DESCRIPTION OF THE INVENTION]

### [TECHNICAL SOLUTION]

Various embodiments may provide a supporting structure having a differential width of a bar supporting a flexible display in a slidable electronic device.

An electronic device according to an embodiment may comprise a flexible display including a flat area and a bending area selectively moving along the curved surface and a supporting structure including a plurality of bars disposed to be spaced apart from each other on a rear surface of the bending area included in the flexible display. In at least one of the plurality of bars, a width of a center portion may be larger than a width of an end portion.

An electronic device according to an embodiment may comprise a flexible display including a flat area and a selectively bent bending area which is an area other than the flat area, and a supporting plate in which a stretchable area including a plurality of holes or slits in a portion corresponding to the bending area and a support area not including a plurality of holes or slits are alternately formed. The support area may have a center portion with a width larger than a width of an outside in a short direction of the supporting plate.

According to various embodiments of the present disclosure, a slidable electronic device may be provided that enhances rigidity by providing a supporting structure having differential widths, thereby preventing some bars from bending at specific portions.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [BRIEF DESCRIPTION OF THE DRAWINGS]

FIG. 1 is a view illustrating an electronic device in a network environment according to various embodiments;
FIG. 2 is a view illustrating a state in which a second display area of a display is received in a second housing, according to one of various embodiments of the disclosure;
FIG. 3 is a view illustrating a state in which a second display area of a display is exposed to the outside of a second housing, according to one of various embodiments of the disclosure;
FIG. 4 is an exploded perspective view illustrating an electronic device according to various embodiments of the disclosure;
FIG. 5A is a cross-sectional view illustrating an associated configuration of a gear connected with a motor and a rack in a closed state of an electronic device according to various embodiments of the disclosure;
FIG. 5B is a cross-sectional view illustrating an arrangement relationship between a motor and a battery in a closed state of an electronic device according to various embodiments of the disclosure;
FIG. 6A is a cross-sectional view illustrating an associated configuration of a gear connected with a motor and a rack in an open state of an electronic device according to various embodiments of the disclosure;
FIG. 6B is a cross-sectional view illustrating an arrangement relationship between a motor and a battery in an open state of an electronic device according to various embodiments of the disclosure;
FIG. 7 is a view schematically illustrating a display assembly having a flexible structure in an electronic device according to an embodiment of the disclosure;
FIG. 8 is a plan view illustrating a supporting plate included in a display assembly according to an embodiment of the disclosure;
FIG. 9 is a plan view illustrating a supporting structure coupled to a supporting plate in a display assembly according to an embodiment of the disclosure;
FIG. 10 is a cross-sectional view taken along a line A-A' of FIG. 9, illustrating a center portion of a bar;
FIG. 11 is a cross-sectional view taken along a line B-B' of FIG. 9, illustrating an end portion of a bar;
FIG. 12 is a cross-sectional view illustrating a state in which a portion along the line A-A' of FIG. 9 is bent, illustrating a center portion of a bar positioned in a portion of an electronic device; and
FIGS. 13 to 17 are views illustrating a supporting structure according to various embodiments of the disclosure.

Reference may be made to the accompanying drawings in the following description, and specific examples that may be practiced are shown as examples within the drawings. Other examples may be utilized and structural changes may be made without departing from the scope of the various examples.

### [MODE FOR CARRYING OUT THE INVENTION]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

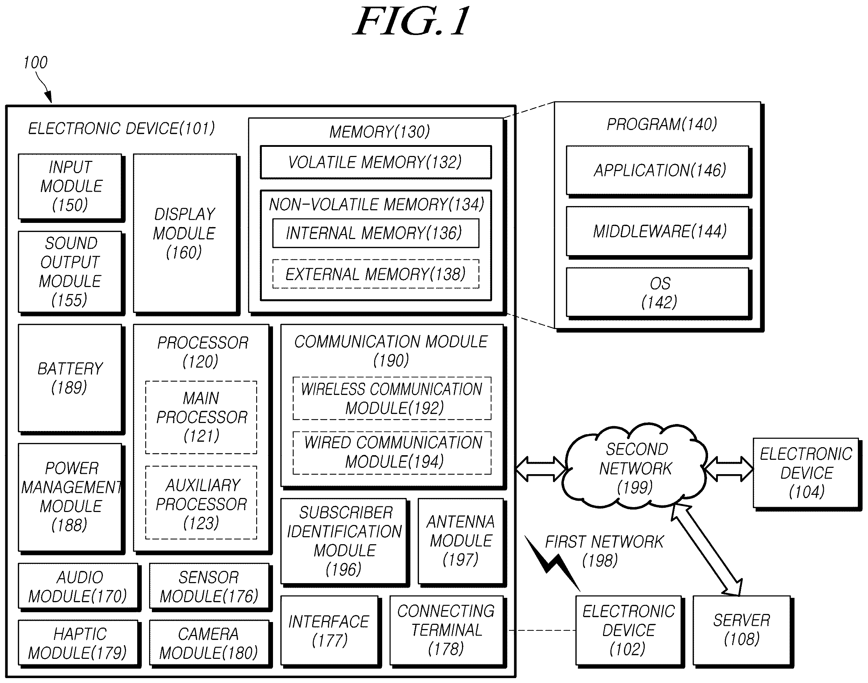

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

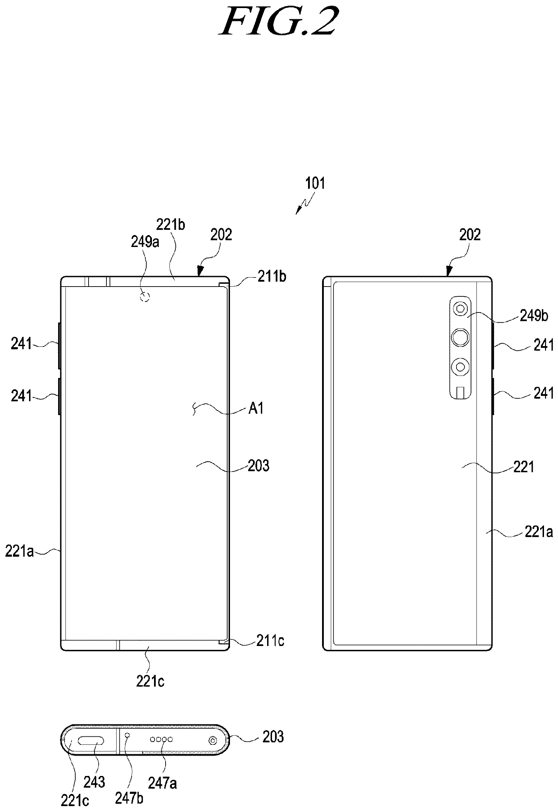

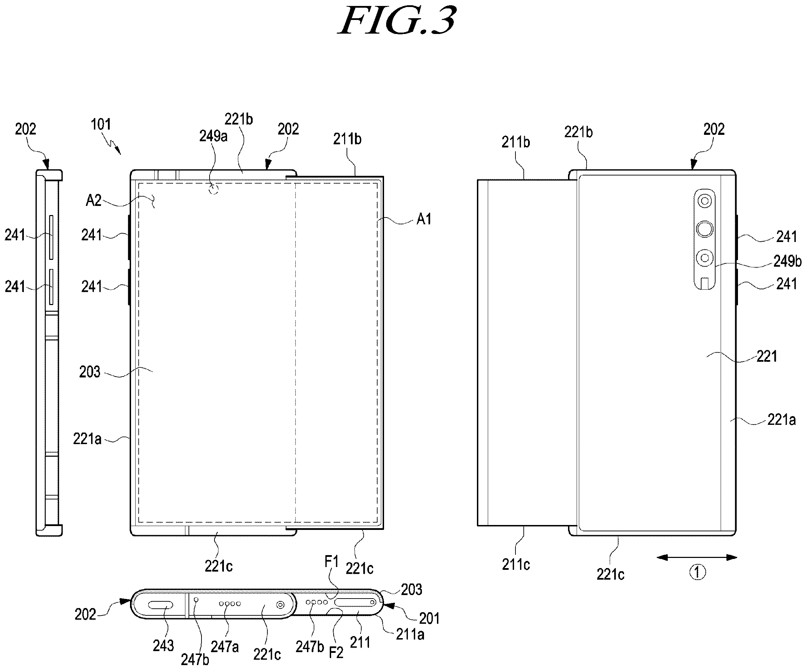

FIG. 2 is a view illustrating a state in which a second display area of a display is received in a second housing, according to one of various embodiments of the disclosure. FIG. 3 is a view illustrating a state in which a second display area of a display is exposed to the outside of a second housing, according to one of various embodiments of the disclosure.

FIGS. 2 and 3 illustrate a structure in which the display 203 (e.g., flexible display) is extended to the right when the electronic device 101 is viewed from the front. However, the extending direction of the display 203 is not limited to one direction (e.g., left direction), and the electronic device 101 may be configured so that the display 203 is extendable in an upper direction, a lower direction, and/or a left direction.

The state shown in FIG. 2 may be defined as a first housing 201 being closed with respect to a second housing 202, and the state shown in FIG. 3 may be defined as the first housing 201 being open with respect to the second housing 202. According to an embodiment, the "closed state" or "opened state" may be defined as a closed or opened state of the electronic device.

Referring to FIGS. 2 and 3, the electronic device 101 may include housings 201 and 202. The housings 201 and 202 may include a second housing 202 and a first housing 201 movably disposed with respect to the second housing 202. According to an embodiment, the electronic device 101 may have a structure in which the second housing 202 is slidably disposed on the first housing 201. According to an embodiment, the first housing 201 may be disposed to perform reciprocating motion by a predetermined distance in a predetermined direction with respect to the second housing 202 such as, for example, a direction indicated by an arrow ①.

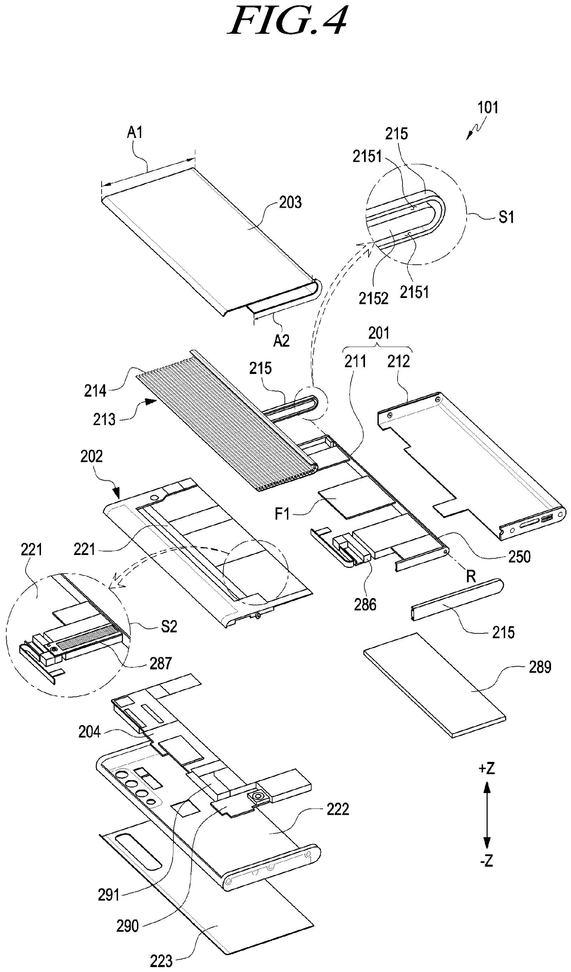

According to an embodiment, the first housing 201 may be referred to as, for example, a first structure, a slide unit, or a slide housing, and may be disposed to reciprocate on the second housing 202. According to an embodiment, the first housing 201 may receive various electrical/electronic components, such as a circuit board or a battery. The second housing 202 may be referred to as, for example, a second structure, a main part, or a main housing, and may guide the movement of the first housing 201. A portion (e.g., a first display area A1) of the display 203 may be seated on the first housing 201. According to an embodiment, another portion (e.g., a second display area A2) of the display 203 may be received into the inside of the second housing 202 (e.g., a slide-in motion) or be exposed to the outside of the second housing 202 (e.g., a slide-out motion) as the first housing 201 moves (e.g., slides) with respect to the second housing 202. According to an embodiment, a motor, a speaker, a sim socket, and/or a sub circuit board electrically connected with a main circuit board may be disposed in the first housing 201. A main circuit board on which electrical components, such as an application processor (AP) and a communication processor (CP), are mounted may be disposed in the second housing 202. The first housing 201 may include a first surface (e.g., the first surface F1 of FIG. 3) forming at least a portion of a first plate 211 and a second surface F2 forming at least a portion of a slide cover 212 (see FIG. 4) and facing the first surface F1.

According to various embodiments, the first housing 201 may include the first plate 211 (e.g., a slide plate). According to an embodiment, the first plate 211 may support at least a portion of the display 203 (e.g., the first display area A1). According to an embodiment, the first housing 201 may include the first plate 211, a 1-1st sidewall 211a extending from the first plate 211, a 1-2nd sidewall 211b extending from the 1-1st sidewall 211a and the first plate 211, and a 1-3rd sidewall 211c extending from the 1-1st sidewall 211a and the first plate 211 and positioned substantially parallel to the 1-2nd sidewall 211b.

According to various embodiments, the second housing 202 may include a second plate 221 (e.g., main case), a 2-1st sidewall 221a extending from the second plate 221, a 2-2nd sidewall 221b extending from the 2-1st sidewall 221a and the second plate 221, and a 2-3rd sidewall 221c extending from the 2-1st sidewall 221a and the second plate 221 and disposed substantially parallel to the 2-2nd sidewall 221b. According to an embodiment, the 2-2nd sidewall 221b and the 2-3rd sidewall 221c may be formed substantially perpendicular to the 2-1st sidewall 221a. According to an embodiment, the second plate 221, the 2-1st sidewall 221a, the 2-2nd sidewall 221b, and the 2-3rd sidewall 221c may be formed to have an opening in one surface (e.g., the front surface) to receive at least a portion of the first housing 201. For example, the first housing 201 may be coupled to the second housing 202 in a state in which it is at least partially surrounded, and the first housing 201 may be slide in a direction parallel to the first surface F1 or the second surface F2, for example, the direction ① indicated with the arrow. According to an embodiment, the second plate 221, the 2-1st sidewall 221a, the 2-2nd sidewall 221b, and/or the 2-3rd sidewall 221c may be integrally formed. According to another embodiment, the second plate 221, the 2-1st sidewall 221a, the 2-2nd sidewall 221b, and/or the 2-3rd sidewall 221c may be formed as separate housings and be combined or assembled.

According to various embodiments, the second plate 221 and/or the 2-1st sidewall 221a may cover at least a portion of the display 203. For example, at least a portion of the display 203 may be received in the second housing 202. The second plate 221 and/or the 2-1st sidewall 221a may cover a portion of the display 203 received in the second housing 202.

According to various embodiments, the first housing 201 may be moved into an opened state and closed state with respect to the second housing 202 in a first direction (e.g., direction ①) parallel to the 2-2nd sidewall 221b or the 2-3rd sidewall 221c. The first housing 201 may be moved to be positioned at a first distance from the 2-1st sidewall 221a in the closed state. **In** the opened state, the first housing 201 may be moved to be positioned at a second distance greater than the first distance from the 2-1st sidewall 221a. **In** some embodiments, in the closed state, the first housing 201 may surround a portion of the 2-1st sidewall 221a.

According to various embodiments, the electronic device 101 may include the display 203, a key input device 241, a connector hole 243, audio modules 247a and 247b, or camera modules 249a and 249b. Although not shown, the electronic device 101 may further include an indicator (e.g., a light emitting diode (LED) device) or various sensor modules.

According to various embodiments, the display 203 may include the first display area A1 and the second display area A2. According to an embodiment, the first display area A1 may be disposed on the second housing 202. The second display area A2 may extend from the first display area A1 and, as the first housing 201 slides, the second display area A2 may be inserted or received in the second housing 202 (e.g., structure) or exposed to the outside of the second housing 202.

According to various embodiments, the second display area A2 may be substantially moved while being guided by an area (e.g., a curved surface 250 of FIG. 4) of the first housing 201 and may be received in, or exposed to the outside of, the second housing 202 or a space formed between the first housing 201 and the second housing 202. According to an embodiment, the second display area A2 may move based on a slide of the first housing 201 in the first direction (e.g., the direction indicated by the arrow ①) of the first housing 201. For example, while the first housing 201 slides, a portion of the second display area A2 may be deformed into a curved shape in a position corresponding to the curved surface 250 of the first housing 201.

According to various embodiments, when viewed from above the first plate 211 (e.g., slide plate), if the first housing 201 moves from the closed state to the opened state, the second display area A2 may be exposed to the outside of the second housing 202 to be substantially coplanar with the first display area A1. The display 203 may be disposed to be coupled with, or adjacent to, a touch detecting circuit, a pressure sensor capable of measuring the strength (pressure) of touches, and/or a digitizer for detecting a magnetic field-type stylus pen. In one embodiment, the second display area A2 may be at least partially received inside the second housing 202, and a portion of the second display area A2 may be visually exposed to the outside even in the state shown in FIG. 2 (e.g., the closed state). According to an embodiment, irrespective of the closed state or the opened state, the exposed portion of the second display area A2 may be positioned on a portion (e.g., the curved surface 250 of FIG. 4) of the first housing, and a portion of the second display area A2 may remain in the curved shape in the position corresponding to the curved surface 250.

According to various embodiments, the key input device 241 may be positioned in one area of the first housing 201. Depending on the appearance and the state of use, the electronic device 101 may not include the key input device 241 that is illustrated, or may include additional key input device(s). According to an embodiment, the electronic device 101 may include a key input device such as, for example, a home key button and/or a touchpad disposed around the home key button. According to another embodiment, at least a portion of the key input device 241 may be disposed on the 2-1st sidewall 221a, the 2-2nd sidewall 221b, and/or the 2-3rd sidewall 221c of the second housing 202.

According to various embodiments, the connector hole 243 may be omitted and the electronic device 101 may receive a connector (e.g., a universal serial bus (USB) connector) for transmitting and receiving power and/or data with an external electronic device. Although not shown, the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the 2-3rd sidewall 221c but is not limited thereto. The connector hole 243 or another connector hole may be disposed in the 2-1st sidewall 221a or the 2-2nd sidewall 221b.

According to various embodiments, the audio modules may include at least one speaker hole 247a and/or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker).

According to various embodiments, the camera modules may include a first camera module 249a and a second camera module 249b. The second camera module 249b may be positioned in the first housing 201 and may capture a subject in a direction opposite to the first display area A1 of the display 203. The electronic device 101 may include a plurality of camera modules (e.g., the first camera module 249a and the second camera module 249b). For example, the electronic device 101 may include at least one from among a wide-angle camera, a telephoto camera, and a close-up camera, and according to an embodiment, the electronic device 200 may measure the distance to the subject by including an infrared projector and/or an infrared receiver. The camera modules (e.g., the first camera module 249a and the second camera module 249b) may include one or more lenses, an image sensor, and/or an image signal processor. The first camera module 249a may be disposed to face in the same direction as the display 203. For example, the first camera module 249a may be disposed in an area overlapping the display 203 or around the first display area A1 and, when disposed in the area overlapping the display 203, the first camera module 249a may capture the object through the display 203. According to an embodiment, the first camera module 249a may include an under display camera (UDC) that has a screen display area (e.g., the first display area A1) that may not be visually exposed but hidden.

According to various embodiments, an indicator of the electronic device 101 may be disposed on the first housing 201 or the second housing 202, and the indicator may include a light emitting diode to provide state information about the electronic device 101 as a visual signal. The sensor module of the electronic device 101 may produce an electrical signal or data value corresponding to the internal operation state or external environment state of the electronic device. The sensor module may include, for example, a proximity sensor, a fingerprint sensor, and/or a biometric sensor (e.g., an iris/face recognition sensor or a heartrate monitor (HRM) sensor). According to another embodiment, the sensor module may further include, for example, at least one from among a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

FIG. 4 is an exploded perspective view illustrating an electronic device according to various embodiments of the disclosure;

Referring to FIG. 4, the electronic device 101 may include a first housing 201, a second housing 202, a display 203 (e.g., a flexible display, a foldable display, or a rollable display), and/or a supporting structure 213 (e.g., an articulated hinge structure). A portion (e.g., the second display area A2) of the display 203 may be received in the electronic device 101 along the curved surface 250 of the first housing 201.

The configuration of the first housing 201, the second housing 202, and the display 203 of FIG. 4 may be identical in whole or part to the configuration of the first housing 201, the second housing 202, and the display 203 of FIGS. 2 and 3.

According to various embodiments, the first housing 201 may include a first plate 211 and a slide cover 212. The first plate 211 and the slide cover 212 may be mounted (e.g., at least partially connected) on the second housing 202 and be reciprocated in one direction (e.g., the direct of the arrow 1 in FIGS. 2 and 3) while being guided by the second housing 202. According to an embodiment, the first plate 211 may support the display 203. For example, the first plate 211 may include a first surface F1. The first display area A1 of the display 203 may be substantially positioned on the first surface F1 to maintain a flat panel shape. The slide cover 212 may protect the display 203 positioned on the first plate 211. For example, at least a portion of the display 203 may be positioned between the first plate 211 and the slide cover 212. According to an embodiment, the first plate 211 and the slide cover 212 may be formed of a metal material and/or a non-metal (e.g., polymer) material. According to an embodiment, the first plate 211 may receive at least some (e.g., the battery 289, driving motor 286, and rack 287) of the components of the electronic device 101.

According to various embodiments, the supporting structure 213 may be connected with the first housing 201. For example, the supporting structure 213 may be positioned between the first plate 211 and the slide cover 212. According to an embodiment, as the first housing 201 slides, the supporting structure 213 may move with respect to the second housing 202. **In** the closed state (e.g., FIG. 2) of the supporting structure 213, most of the structure may be received in the second housing 202. According to an embodiment, at least a portion of the supporting structure 213 may move corresponding to the curved surface 250 positioned at the edge of the first housing 201.

According to various embodiments, the supporting structure 213 may include a plurality of bars 214 (e.g., rods) and a guide rail 215. The plurality of bars 214 may extend in a straight line and be disposed parallel to a rotational axis R formed by the curved surface 250, and the plurality of bars 214 may be arranged, with respect to each other, along a direction substantially perpendicular to the rotational axis R (e.g., the direction along which the first housing 201 slides).

According to various embodiments, the guide rail 215 may guide the movement of the plurality of bars 214. The guide rail 215 may include an upper guide rail coupled with an upper end of the first plate 211 and connected with upper ends of the plurality of bars 214, and a lower guide rail coupled with a lower end of the first plate 211 and connected with lower ends of the plurality of bars 214. According to an embodiment, referring to a first enlarged area S1, when the plurality of bars 214 are slid while moving along the curved surface 250, the upper ends and/or lower ends of the plurality of bars 214 may be moved while remaining fitted into the guide rail 215. For example, the plurality of bars 214 may be slid along a rail 2151 that is groove-shaped and formed inside the guide rail 215, with their upper ends and/or lower ends fitted into the rail 2151.

According to an embodiment, as the driving motor 286 is driven (e.g., driven to slide out the display), the first plate 211 where the driving motor 286 is disposed may slide out, and a protrusion 2152 inside the guide rail 215 may push out the upper ends and/or lower ends of the plurality of bars 214 that are bent. Accordingly, the display 203 received between the first plate 211 and the slide cover 212 may be extended to the front. According to an embodiment, as the driving motor 286 is driven (e.g., driven to slide in the display), the first plate 211 where the driving motor 286 is disposed may be slid in, and the outer portion (e.g., a portion other than the protrusion 2152) of the guide rail 215 may push out the upper and/or lower ends of the plurality of bars 214 that are bent. Accordingly, the display 203, that is extended, may be received between the first plate 211 and the slide cover 212.

According to an embodiment, the rack 287 may be disposed in the second housing 202 and guide the sliding motion of the first housing 201 and the display 203. A second enlarged area S2 represents the rear surface (e.g., the surface facing the -Z axis) of the second plate 221. Referring to the second enlarged area S2, the rack 287 may be fixedly disposed on one surface (e.g., one surface facing the -Z axis) of the second plate 221 of the second housing 202 and may guide a gear connected to the driving motor 286 to move while rotating in the slide direction. According to another embodiment, the rack 287 may be disposed in the first housing 201, and the driving motor 286 may be disposed in the second housing 202. The rack 287 may guide the sliding motion of the first housing 201 and the display 203. For example, the rack 287 may be fixedly disposed on the first plate 211 of the first housing 201 and be rotated with the gear connected to the driving motor 286 disposed on the second plate 221 of the second housing 202 while sliding.

According to various embodiments, the second housing 202 may include a second plate 221, a second plate cover 222, and a third plate 223. The second plate 221 may overall support the electronic device 101. The first plate 211 may be disposed on one surface of the second plate 221, and a circuit board 204 (e.g., a printed circuit board) may be coupled to the other surface of the second plate 221. According to an embodiment, the second plate 221 may receive components (e.g., the battery 289 and the circuit board 204) of the electronic device 101. The second plate cover 222 may protect various components positioned on the second plate 221.

According to various embodiments, the third plate 223 may substantially form at least a portion of the exterior of the second housing 202 or the electronic device 101. For example, the third plate 223 may be coupled to the outer surface of the second plate cover 222. According to an embodiment, the third plate 223 may be integrally formed with the second plate cover 222. According to an embodiment, the third plate 223 may provide a decorative effect on the exterior of the electronic device 101. The second plate 221 and the second plate cover 222 may be formed of at least one from among a metal and a polymer, and the third plate 223 may be formed of at least one from among metal, glass, synthetic resin or ceramic. According to an embodiment, the second plate 221, the second plate cover 222 and/or the third plate 223 may be formed of a material that transmits light at least partially (e.g., an auxiliary display area). For example, in a state in which a portion of the display 203 (e.g., the second display area A2) is received in the electronic device 101, the electronic device 101 may output visual information using the second display area A2. The auxiliary display area may be a portion of the second plate 221, the second plate cover 222, and/or the third plate 223 in which the display 203 received in the second housing 202 is positioned.

According to various embodiments, a plurality of circuit boards may be received in the second housing 202. A processor, memory, and/or interface may be mounted on the circuit board 204, which may be a main board. The processor may include one or more of, for example, a central processing unit, an application processor, a graphic processing device, an image signal processing, a sensor hub processor, and a communication processor. According to various embodiments, the circuit board 204 may include a flexible printed circuit board type radio frequency cable (FRC). For example, the circuit board 204 may be disposed on at least a portion of the second plate 221 and may be electrically connected to the antenna module and the communication module.

According to an embodiment, the memory may include, for example, a volatile or non-volatile memory.

According to an embodiment, the interface may include, for example, a high definition multimedia interface (HDMI), a universal serial bus (USB) interface, a secure digital (SD) card interface, and/or an audio interface. The interface may electrically or physically connect, for example, the electronic device 101 with an external electronic device and may include a USB connector, an SD card/multimedia card (MMC) connector, or an audio connector.

According to various embodiments, the electronic device 101 may further include a separate sub circuit board 290 spaced apart from the circuit board 240 in the second housing 202. The sub circuit board 290 may be electrically connected to the circuit board 240 through the flexible circuit board 291. The sub circuit board 290 may be electrically connected to electrical components disposed in an end area of the electronic device 101, such as the battery 289 or a speaker and/or a sim socket, and may transfer signals and power.

According to an embodiment, the battery 289 may be a device for supplying power to at least one component of the electronic device 101. The battery 189 may include, for example, a primary cell which is not rechargeable, a secondary cell which is rechargeable, and/or a fuel cell. At least a portion of the battery 289 may be disposed on substantially the same plane as the circuit board 204. The battery 289 may be integrally or detachably disposed inside the electronic device 101.

According to an embodiment, the battery 289 may be formed of a single embedded battery or may include a plurality of removable batteries. For example, when the embedded battery is positioned on the first plate 211, the embedded battery may move as the first plate 211 slides.

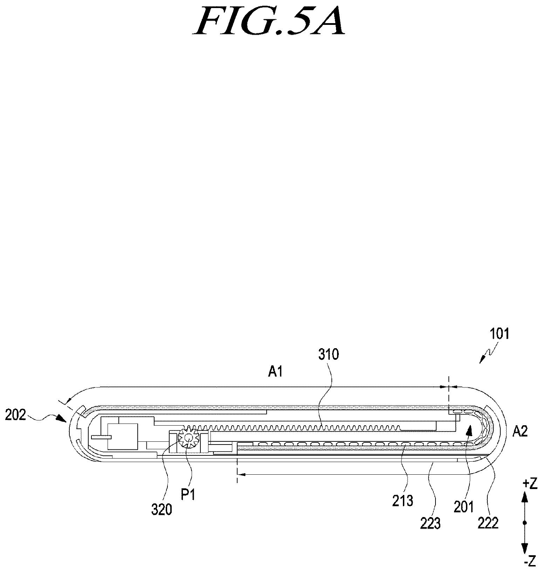

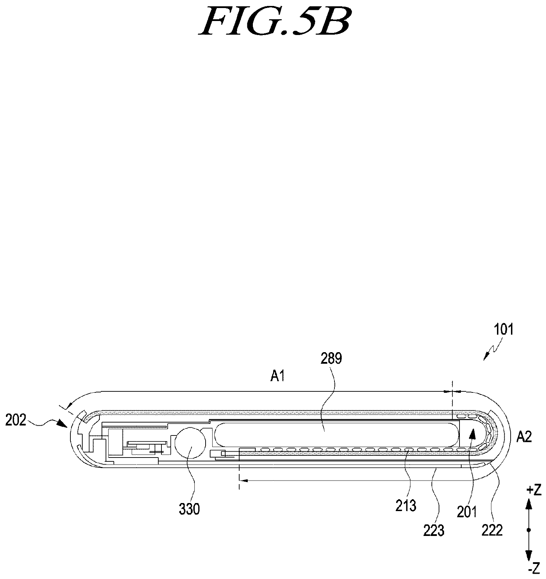

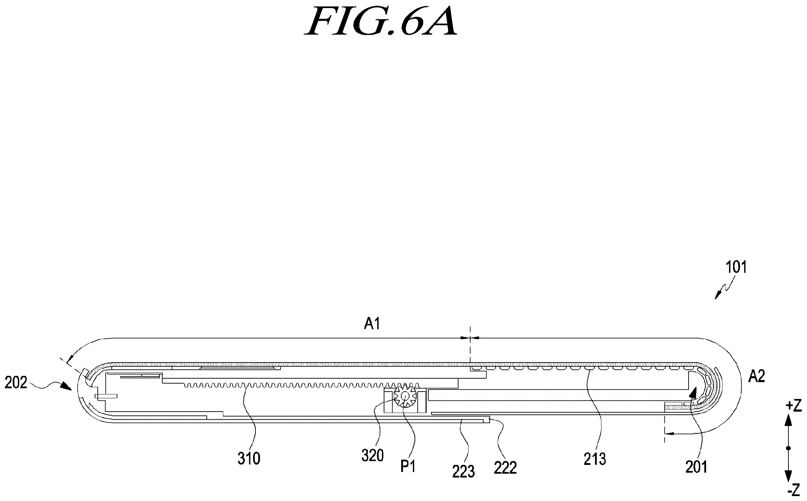

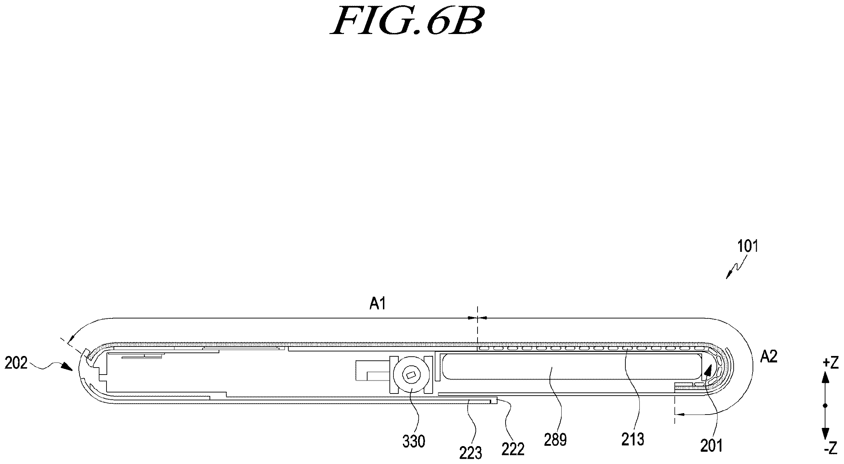

FIG. 5A is a cross-sectional view illustrating an associated configuration of a gear connected with a motor and a rack in a closed state of an electronic device according to various embodiments of the disclosure. FIG. 5B is a cross-sectional view illustrating an arrangement relationship between a motor and a battery in a closed state of an electronic device according to various embodiments of the disclosure. FIG. 6A is a cross-sectional view illustrating an associated configuration of a gear connected with a motor and a rack in an open state of an electronic device according to various embodiments of the disclosure. FIG. 6B is a cross-sectional view illustrating an arrangement relationship between a motor and a battery in an open state of an electronic device according to various embodiments of the disclosure.

According to various embodiments, the electronic device 101 may include a first housing 201, a second housing 202, a display 203, and a driving structure. The electronic device 101 may further include various components (e.g., a camera module and a battery) disposed in the first housing 201 or the second housing 202.

The configuration of the first housing 201 and the second housing 202 of FIGS. 5A to 6B may be identical in whole or part to the configuration of the first housing 201 and the second housing 202 of FIGS. 2A to 4.

According to various embodiments, as the first housing 201 (and the display 203 connected to the first housing 201) slides in-out with respect to the second housing 202, the second housing 202 may be in a closed state or an open state.

According to various embodiments, the electronic device 101 may include a driving structure for automatically or semi-automatically providing a slide-in/out operation of the display 203. For example, when the user presses an open trigger button (e.g., the key input device 241 of FIG. 2A) exposed outside the electronic device 101, the display 203 may automatically slide in or out (automatic operation). As another example, when the user slides out the display 203 by pushing the display 203 of the electronic device 101 up to a designated section, for the remaining section, it may be completely slid out by the force of the elastic member mounted in the electronic device 101 (semi-automatic operation). The slide-in operation of the electronic device 101 may also be performed to correspond to the slide-out operation (semi-automatic operation).

According to an embodiment, the driving structure may include a driving motor 330, a gear 320 mounted on an end portion of the driving motor 330, a rack 310, and a connection substrate electrically connected to the driving motor 330.

According to an embodiment, the driving motor 330 may be disposed in the first housing 201 to be slidable with respect to the second housing 202. The driving motor 330 may transfer a driving force to the gear 320 connected to the end portion.

According to an embodiment, the driving motor 330 may be disposed not to overlap with the second display area A2 of the display 203. For example, an axis P1 of the driving motor 330 may be disposed perpendicular to the sliding direction, and one surface of the driving motor 330 facing in the +Z-axis direction may overlap with the first display area A1, but one surface of the driving motor 286 facing in the -Z-axis direction may not overlap with the second display area A2 regardless of the slide-in/out of the display 203. One surface of the driving motor 330 facing in the - Z-axis direction may face the first housing 201 in the slide-in state of the display 203, and may face the second housing 202 in the slide-out state of the display 203. According to an embodiment, the driving motor 330 may be disposed in parallel with at least a portion of the battery 289, and may be electrically connected to the connection substrate disposed adjacent thereto.

According to an embodiment, the rack 310 may be disposed in the second housing 202 and guide the sliding movement of the first housing 201 and the display 203. The rack 310 may be fixedly disposed on one surface (e.g., one surface facing the -Z-axis) of the second plate 221 of the second housing 202, and may guide the gear 320 to move while rotating in the sliding direction. At least a portion of one surface of the rack 310 facing in the -Z-axis direction may face the second display area A2 in the slide-in state of the display 203, and may not face the second display area A2 in the slide-out state of the display 203. According to an embodiment, the rack 310 may be disposed not to overlap with the battery 289. For example, a detachable battery may be disposed in the electronic device 101, and the rack 310 may be positioned between the batteries when viewed toward the rear surface.

According to an embodiment, the gear 320 may be positioned on the axis P1 of the driving motor 330, and may slide the first housing 201 and the display 203 while rotating along the rack 310. When the first housing 201 slides due to the rotation of the gear 320, an electrical component (hereinafter, referred to as a first electrical component) mounted in the first housing 201 may also slide. For example, the first electrical component may be at least one from among the driving motor 330, components disposed on the connection substrate340, a speaker, or a SIM socket. As another example, the first electrical component may be the battery 289. When it is a detachable battery, it may be at least one of detachable batteries.

According to an embodiment, the connection substrate may be disposed adjacent to the driving motor 330 and/or the rack 310 in the first housing 201. The connection substrate 340 may be a component to be electrically connected to the main circuit board (e.g., the circuit board 204 of FIG. 4) disposed in the second housing 202. The main circuit board may mount an electrical structure (e.g., a processor) to control driving of the driving motor 330 or to provide power to the driving motor 330. The connection substrate may be electrically connected to the main circuit board 204 to control driving of the driving motor 330 or transfer a signal for controlling power. According to an embodiment, the connection substrate and the main circuit board 204 may be rigid boards, and the electronic device 101 may further include a separate connection FPCB for connecting the connection substrate and the main circuit board 204. According to another embodiment, the power of the battery 289 disposed adjacent to the driving motor 330 may directly provide power through the connection substrate.

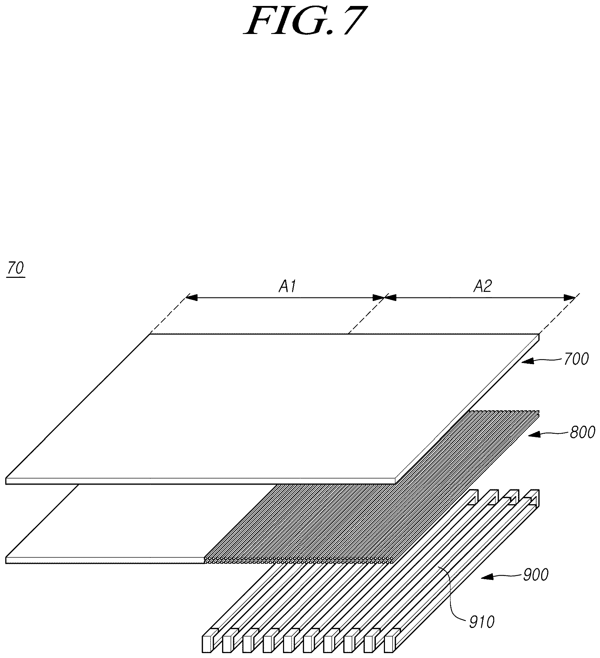

FIG. 7 is a view schematically illustrating a display assembly 70 having a flexible structure in an electronic device (e.g., the electronic device 101 of FIG. 1) according to an embodiment of the disclosure.

FIG. 7 is provided to describe a coupling relationship between a flexible display 700, a supporting plate 800, and/or a supporting structure 900, and there may be other additional components or a coupling structure of the components. However, in describing an embodiment of the disclosure, they are determined not to be directly related, and a detailed description thereof is omitted in FIG. 7.

Referring to FIG. 7, in an embodiment, the display assembly 70 may be a structure for providing a flexible display in the electronic device 101. The structure may have a flexible structure. The display assembly 70 may include a flexible display 700, a supporting plate 800, and/or a supporting structure 900. The supporting structure 900 may have, for example, an articulated hinge module, a bendable member, or a multi-bar structure. The flexible display 700, the supporting plate 800, or the supporting structure 900 may replace the display 203 or the supporting structure 213 of the electronic device 101 illustrated in FIGS. 2 to 6B.

According to an embodiment, the flexible display 700 may include a first display area A1 and/or a second display area A2. The first display area A1 may be, for example, a flat area that is exposed to the outside and maintains a flat surface regardless of a slide-in or slide-out operation of the electronic device 101. The second display area A2 may be received into the housing (e.g., the second housing 202 of FIG. 2) by the slide-in operation of the electronic device 101, or may be exposed to the outside of the housing (e.g., the second housing 202 of FIG. 2) by the slide-out operation. In an embodiment, the second display area A2 may be a bending area in which a portion thereof is bent by a portion (e.g., the curved surface 250 of FIG. 4) of the electronic device 101. In the flexible display 700, the first display area A1 may have a relatively large area compared to the second display area A2.

According to an embodiment, the supporting plate 800 may be disposed on the rear side of the flexible display 700. The rear side of the flexible display 700 may indicate a side positioned opposite to a side from which light is emitted from the display panel including a plurality of pixels. The supporting plate 800 may be attached such that, for example, one side of the supporting plate 800 faces the flexible display 700. The supporting plate 800 may contribute to durability of the flexible display 700. The supporting plate 800 may reduce the influence on the flexible display 700 of a load or stress that may occur when the flexible display 700 slides in or slides out. The supporting plate 800 may also help protect the flexible display 700 from being damaged by a force transferred when the first housing (e.g., the first housing 201 of FIG. 3) moves. The supporting plate 800 may be configured so that, for example, a portion corresponding to the second display area A2 (e.g., the bending area) of the flexible display 700 is bendable.

According to an embodiment, the supporting plate 800 may be formed of various metallic materials and/or non-metallic materials (e.g., polymers). The supporting plate 800 may include, for example, stainless steel. The supporting plate 800 may include, for example, engineering plastic. According to an embodiment, the supporting plate 800 may be implemented integrally with the flexible display 700.

According to an embodiment, the supporting plate 800 may make electronic components (e.g., the supporting structure 900) positioned inside the electronic device 101 substantially invisible from the outside through the flexible display 700.

According to an embodiment, the supporting plate 800 may include a supporting sheet including a touch panel or a pen recognition panel. The touch panel may detect the user's finger gesture input. The touch panel may output a touch event value corresponding to the touched touch signal. The touch panel may be implemented as one from among a capacitive type or a resistive type. Here, the capacitive touch panel may obtain (e.g., calculate) touch coordinates by detecting fine electricity caused by the user's human body. Here, the resistive touch panel may include two embedded electrode plates, and may obtain (e.g., calculate) touch coordinates by detecting a flow of current caused as the upper and lower plates at the touched point contact each other. The pen recognition panel may detect the user's pen gesture input according to the operation of the user's touch pen (e.g., a stylus pen or a digitizer pen). The pen recognition panel may output a pen approach event value or a pen touch event value in response to the user's pen gesture. The pen recognition panel may be implemented in, for example, an EMR method. The pen recognition panel to which the EMR method is applied may detect a touch or approach input according to a change in the strength of electromagnetic field due to the approach or touch of the touch pen.

According to an embodiment, the supporting structure 900 may be disposed on the rear side of the flexible display 700 corresponding to the area of the supporting plate 800 supporting the second display area A2. For example, the supporting structure 900 may pass along a portion (e.g., the curved surface 250 of FIG. 4) according to a slide-in operation or a slide-out operation of the electronic device 101. The supporting structure 900 may be attached to a partial area of the rear side of the supporting plate 800. In an embodiment, the supporting plate 800 may be disposed so that one side of the supporting plate 800 faces the rear side of the flexible display 700 and at least a portion of the other side of the supporting plate 800 contacts the supporting structure 900. In an embodiment, the supporting structure 900 may include a plurality of bars 910. The plurality of bars 910 may be disposed at regular intervals or may be disposed at irregular intervals.

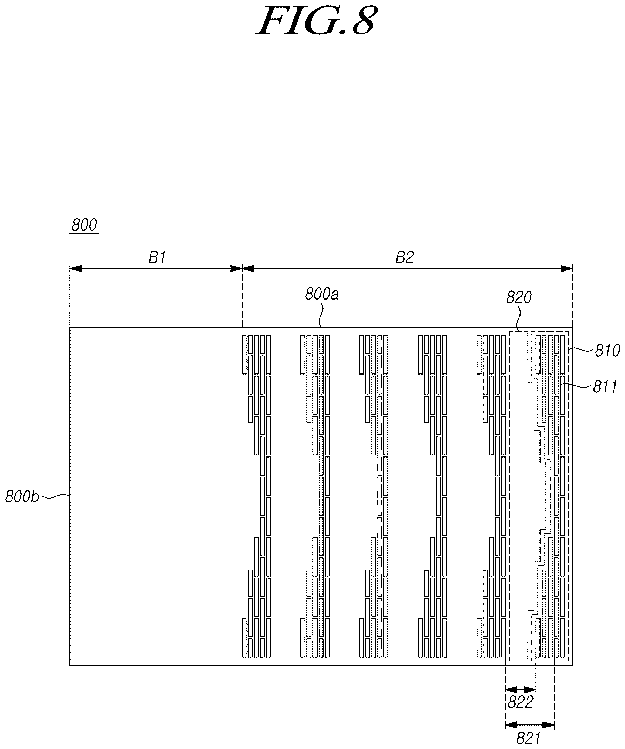

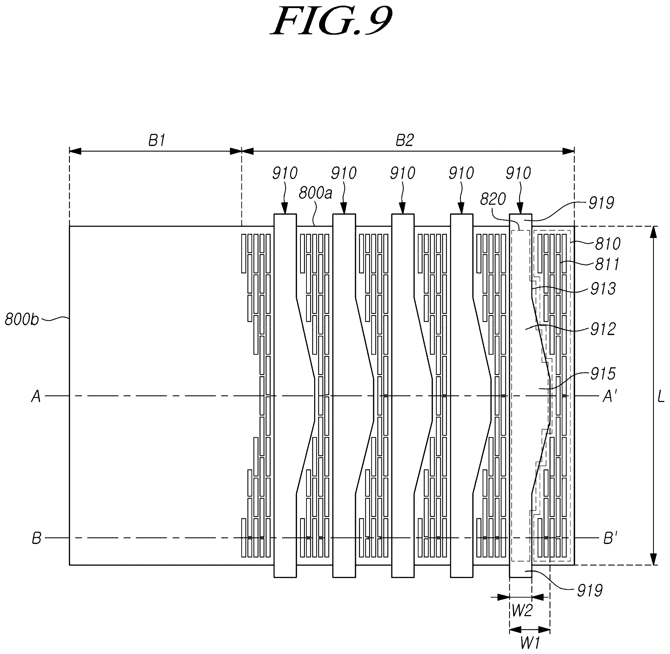

FIG. 8 is a plan view illustrating a supporting plate (e.g., the supporting plate 800 of FIG. 7) included in a display assembly (e.g., the display assembly 70 of FIG. 7) according to an embodiment of the disclosure. FIG. 9 is a plan view illustrating a supporting structure (e.g., the supporting structure 900 of FIG. 7) coupled to a supporting plate (e.g., the supporting plate 800 of FIG. 7) in a display assembly (e.g., the display assembly 70 of FIG. 7) according to an embodiment of the disclosure.

Referring to FIGS. 8 and 9, a supporting plate 800 according to an embodiment may include a first plate area B1 and/or a second plate area B2. In an embodiment, the supporting plate 800 may include a long lateral side 800a and a short lateral side 800b. A direction parallel to the long lateral side 800a may be referred to as a long direction, and a direction parallel to the short lateral side 800b may be referred to as a short direction. The first plate area B1 may be, for example, an area corresponding to the rear side of the first display area A1 of the flexible display (e.g., the flexible display 700 of FIG. 7). The second plate area B2 may be, for example, an area corresponding to the rear side of the second display area A2 of the flexible display 700.

Hereinafter, for convenience of description, it should be noted that the sizes of the second plate area B2 and the supporting structure 900 of the supporting plate 800 are somewhat exaggerated.

According to an embodiment, a plurality of holes or slits 811 may be omitted from the first plate area B1 of the supporting plate 800, but embodiments of the present disclosure are not limited thereto.

According to an embodiment, the second plate area B2 of the supporting plate 800 may include a plurality of holes or slits 811. The stretchability (or bending performance) of the second plate area B2 may increase due to the plurality of holes or slits 811 formed in the second plate area B2. The plurality of holes or slits 811 may provide stretchability so that, for example, a portion of the second plate area B2 may be bent when positioned on a portion (e.g., the curved surface 250 of FIG. 4) of the electronic device (e.g., the electronic device 101 of FIG. 2). Hereinafter, the area in which the plurality of holes or slits 811 are formed is referred to as a stretchable area 810. A plurality of stretchable areas 810 may be disposed in the second plate area B2. As the area occupied by the stretchable areas 810 in the second plate area B2 increases, the stretchability of the supporting plate 800 may increase.

According to an embodiment, the second plate area B2 of the supporting plate 800 may include a plurality of support areas 820. The support areas 820 may be formed between the stretchable areas 810. The support area 820 may be an area contacted by one of the plurality of bars 910 included in the supporting structure 900. The support area 820 may support the second display area A2 of the flexible display 700 together with the supporting structure 900. For example, a plurality of holes or slits 811 may not be formed in the support area 820. The bar 910 included in the supporting structure 900 may be attached to the support area 820 using an adhesive, but is not limited thereto.

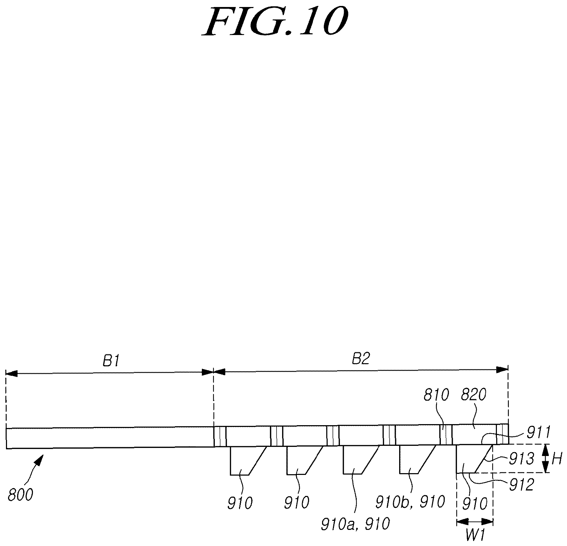

According to an embodiment, each of the plurality of bars 910 may include a first side (e.g., the first side 911 of FIG. 10) (or an upper side), a second side 912 (e.g., the second side 912 of FIG. 10) (or a lower side) positioned opposite to the first side 911, and/or a lateral side 913 (e.g., the lateral side 913 (or a side surface) of FIG. 10) having a plurality of surfaces positioned between the first side 911 and the second side 912. The first side 911 may be, for example, a side in contact with the supporting plate 800. The second side 912 may be, for example, a side farthest from the supporting plate 800. For example, a portion of the lateral side 913 may extend perpendicular to the first side 911 or the second side 912, but is not limited thereto.

Hereinafter, the widths W1 and W2 of the bar 910 may indicate the size of the bar 910 with respect to a direction (e.g., the left/right direction in the drawings) parallel to the long direction of the supporting plate 800. A length L of the bar 910 may indicate the size of the bar 910 with respect to a direction (e.g., the upper/lower direction in the drawings) parallel to the short direction of the supporting plate 800. The height of the bar 910 (e.g., the height H of FIG. 10) may indicate the size of the bar 910 with respect to a direction perpendicular to the plane of the supporting plate 800.

According to an embodiment, at least one bar 910 included in the supporting structure 900 may have a varying width structure. In an embodiment, in at least one bar 910 of the plurality of bars of the supporting structure 900, a first width W1 of a center portion 915 may be larger than a second width W2 of an end portion 919. For example, the at least one bar 910 may have a varying width structure in which the width gradually decreases as it approaches the end portion 919 from the center portion 915. Here, the end portion 919 may refer to an end portion of the bar 910 farthest from the center portion 915. For example, the at least one bar 910 may have a symmetrical structure with respect to the center portion 915.

A bar 910 positioned at a location corresponding to a portion (e.g., the curved surface 250) of the electronic device 101 may bend as a repulsive force is applied to it in a radially outward direction of the curved surface 250. The bar 910 may have sufficient rigidity to offset the repulsive force.

A method for securing the rigidity of the bar 910 includes a method of providing a bar 910 that is thick by increasing the height H of the bar 910. When the height H of the bar 910 increases, the size of the battery (e.g., the battery 289 of FIG. 4) may be reduced or the size of the electronic device 101 itself may be increased to secure a space in the electronic device 101. When the size of the battery 289 is reduced, the storage capacity of the battery 289 is reduced, and when the size of the electronic device 101 itself is increased, portability may be deteriorated in a comparative embodiment. In the disclosure, it is possible to maintain appropriate stretchability of the supporting plate 800 while enhancing the rigidity of the bar 910 by applying a differential width structure without increasing the height H of the bar 910.

Further, in the supporting structure 900 of the disclosure, the first width W1 of the center portion 915 of the bar 910 may be increased, and thus the area of the supporting structure 900 in contact with the support area 820 of the supporting plate 800 may be increased. As a result, adhesion between the supporting structure 900 and the supporting plate 800 may be enhanced.

According to an embodiment, the length L of the bar 910 may be longer than the length in the short direction of the supporting plate 800. For example, the end portion 919 of the bar 910 may protrude from the long lateral side 800a of the supporting plate 800. However, according to some embodiments of the disclosure, the end portion 919 of the bar 910 may not necessarily protrude.

According to an embodiment, the support area 820 may have a varying width. Here, the width of the support area 820 may refer to a length measured with respect to the long direction of the supporting plate 800. In the support area 820, for example, a width 821 of the center portion of the support area 820 may be larger than a width 822 of the end portion in the short direction. Here, the center portion of the support area 820 may be a portion corresponding to the center portion 915 of the bar 910.

According to an embodiment, the shape of the support area 820 may correspond to the shape of a surface of one bar 910 among a plurality of bars that is adhered to the support area 820. For example, the shape of the support area 820 may correspond to the shape of the first side 911 of the bar 910. According to an embodiment, the support area 820 may be larger or smaller than the area of the first side 911 of the bar 910.

Corresponding to the varying width of the support area 820, the width of the center portion in the stretchable area 810 may be smaller than the width of the end portion in the short direction. In a portion of the supporting plate 800 that corresponds to a portion (e.g., the curved surface 250) of the electronic device 101, stress due to bending may be greatest at the outer side in the short direction. Therefore, the stretchable area 810 with a sufficient width may be provided to ensure stretchability at the outer side in the short direction, where the most stress is generated. The center portion in which relatively less stress is generated may have a small width to increase the width of the support area 820.

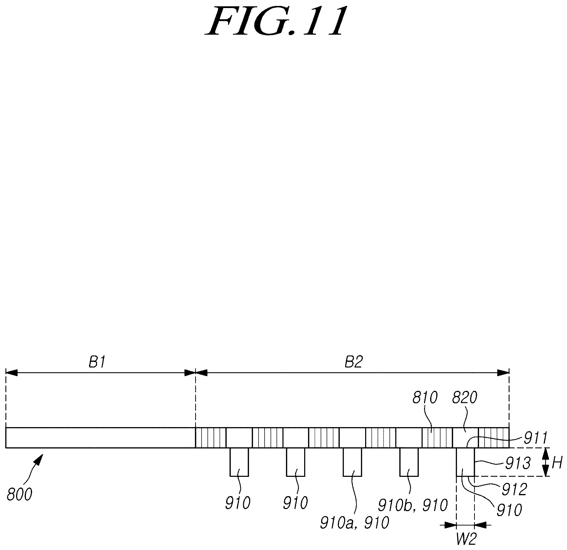

FIG. 10 is a cross-sectional view taken along a line A-A' of FIG. 9, illustrating a center portion (e.g., the center portion 915 of FIG. 9) of a bar 910. FIG. 11 is a cross-sectional view taken along a line B-B' of FIG. 9, illustrating an end portion (e.g., the end portion 919 of FIG. 9) of a bar 910.

Referring to FIGS. 10 and 11, a plurality of bars 910 according to an embodiment may include a first bar 910a and a second bar 910b adjacent to the first bar 910a. The first bar 910a and/or the second bar 910b may be formed so that some of the sides facing the adjacent one of the bars 910 are inclined. For example, near the center portion 915 of the first bar 910a and/or the second bar 910b, the surface facing the adjacent one of the bars 910 may be formed to be inclined. The adjacent one of the bar 910 may correspond to, for example, a bar disposed on the right side of the first bar 910a or the second bar 910b in the drawings. For example, the adjacent one of the bars 910 facing the inclined surface of the first bar 910a may be the second bar 910b.

According to an embodiment, the first bar 910a and/or the second bar 910b may be formed so that the width of the first side 911 facing the flexible display (e.g., the flexible display 700 of FIG. 7) is larger than the width of the second side 912. Here, the width of the first side 911 of the first bar 910a and/or the second bar 910b may correspond to the first width W1 of FIG. 9. A portion near the center portion 915 of the bar 910 may be a portion having a width difference between the first side 911 and the second side 912. At the end portion 919 of the bar 910, the width of the first side 911 and the width of the second side 912 may be substantially the same or similar.

As one surface corresponding to the lateral side 913 at the center portion 915 of the bar 910 (e.g., the first bar 910a) has an inclined structure, it is possible to prevent the bar 910 from receiving physical interference from an adjacent one of the bars 910 (e.g., the second bar 910b) when positioned on a portion (e.g., the curved surface 250 of FIG. 4) of the electronic device (e.g., the electronic device 101 of FIG. 2).

In an embodiment, an inclined surface may not be formed near the end portion 919 of the first bar 910a and/or the second bar 910b. A lateral side of the bar 910 may be formed near the end portion 919 of the first bar 910a and/or the second bar 910b in a direction perpendicular to the plane of the supporting plate 800.

According to an embodiment, all of the bars 910 included in the supporting structure 900 may have the same shape as each other. However, the disclosure is not necessarily limited thereto. According to an embodiment, bars 910 with and without the varying width structure may be alternately arranged in the supporting structure 900. According to an embodiment, a bar 910 having one surface of the lateral side 913 inclined and a bar 910 having the lateral side 913 perpendicular to the supporting plate 800 may be alternately arranged in the supporting structure 900.

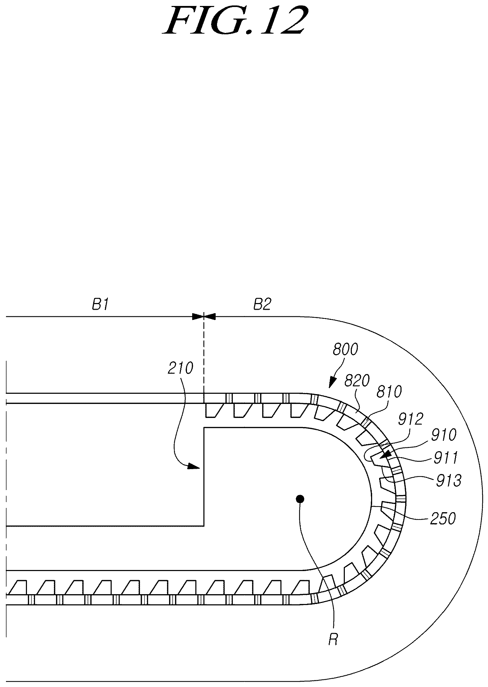

FIG. 12 is a cross-sectional view illustrating a state in which a portion along the line A-A' of FIG. 9 is bent, illustrating a center portion 915 of a bar 910 positioned at a portion (e.g., the curved surface 250) of an electronic device (e.g., the electronic device 101 of FIG. 2).

Referring to FIG. 12, in the electronic device 101 according to an embodiment, the plurality of bars 910 may be spaced apart from adjacent ones of the bars 910 at a sufficient distance so as not to cause physical interference when positioned on a portion (e.g., the curved surface 250). To ensure a sufficient distance, the supporting plate 800 may have a structure where the stretchable area 810 with a predetermined width is placed between the support areas 820.

In an embodiment, the width of the support area 820 increases by the first width (e.g., the first width W1 of FIG. 9) of the center portion 915 of the bar 910, and as a result, the width of the stretchable area 810 may decrease. One surface of the lateral side 913 may be inclined to prevent physical interference between the adjacent ones of the bars 910 on the curved surface 250 due to the reduced width of the stretchable area 810.

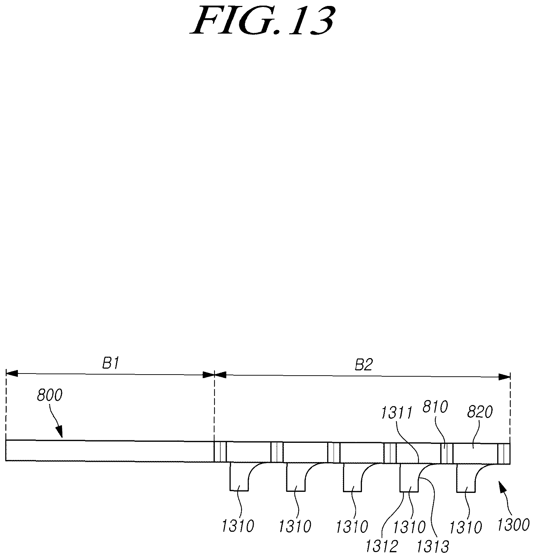

FIGS. 13 to 17 are views illustrating a supporting structure according to various embodiments of the disclosure.

The supporting structure according to various embodiments illustrated in FIGS. 13 to 17 may be disposed in the electronic device 101, replacing the supporting structure 213 of the electronic device 101 illustrated in FIGS. 2 to 6B. In describing the supporting structure according to various embodiments illustrated in FIGS. 13 to 17, portions overlapping those of the supporting structures 213 and 900 described with reference to FIGS. 2 to 12 are omitted from the description.

The cross-sectional views of FIGS. 13 to 15 may be cross-sectional views corresponding to the line A-A' of FIG. 9. For example, the cross-sectional views of FIGS. 13 to 15 may be cross-sectional views taken along the center portion (e.g., the center portion 915 of FIG. 9) of the bar.

Embodiments to be described with reference to FIGS. 13 to 15 may be overall identical or similar to the shape of FIG. 11 when a cross section is taken with respect to a position corresponding to the line B-B' of FIG. 9. In other words, the supporting structure according to various embodiments to be described with reference to FIGS. 13 to 15 may have the differential width structure characteristic of the supporting structure described with reference to FIGS. 8 to 11.

Referring to FIG. 13, a bar 1310 (e.g., the bar 910 of FIG. 7) of a supporting structure 1300 (e.g., the supporting structure 900 of FIG. 7) according to an embodiment may have one surface with a curved, inclined structure. According to an embodiment, the bar 1310 constituting the supporting structure 1300 may include a first side 1311 (or an upper side), a second side 1312 (or a lower side) positioned opposite to the first side 1311, and/or a lateral side 1313 positioned between the first side 1311 and the second side 1312.

According to an embodiment, at least one of the surfaces of the lateral side 1313 of one bar 1310 facing another adjacent one of the bars 1310 may have a curved surface slope. As an embodiment, at least one of the surfaces (e.g., side surfaces) constituting the lateral side 1313 of one bar 1310 may have a curved surface slope. For example, at least one of the surfaces constituting the lateral side 1313 may have a curved shape inclined so that the width of the first side 1311 is larger than the width of the second side 1312. For example, at least one of the surfaces constituting the lateral side 1313 may have a curved shape so that the width of the bar 1310 decreases as it approaches the second side 1312 from the first side 1311. Here, the at least one surface forming the curved surface may be a surface parallel to the short lateral side 800b of the supporting plate 800 among the surfaces constituting the lateral side 1313.

FIG. 13 illustrates that an inclined curved surface is formed on the right side with respect to the drawings, but the disclosure is not limited thereto, and an inclined curved surface may be formed on the left side with respect to the drawings.

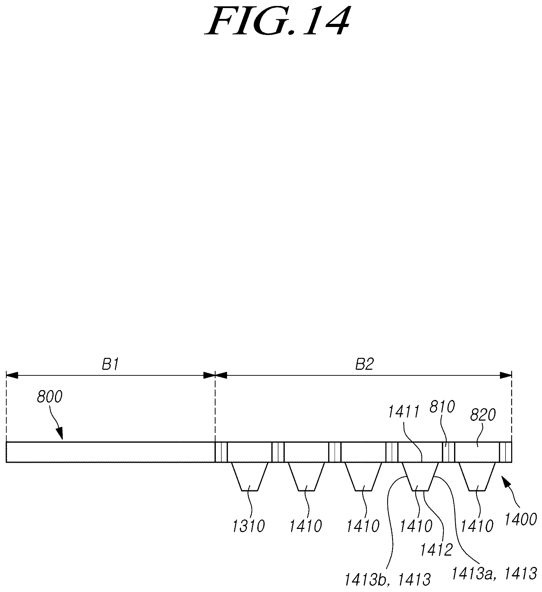

Referring to FIG. 14, a bar 1410 (e.g., the bar 910 of FIG. 7) of a supporting structure 1400 (e.g., the supporting structure 900 of FIG. 7) according to an embodiment may have an inclined structure on a plurality of surfaces. According to an embodiment, the bar 1410 constituting the supporting structure 1400 may include a first side 1411 (or an upper side), a second side 1412 (or a lower side) positioned opposite to the first side 1411, and/or a lateral side 1413 positioned between the first side 1411 and the second side 1412.

According to an embodiment, the lateral side 1413 may be formed of four surfaces. The lateral side 1413 may include a first lateral surface 1413a and a second lateral surface 1413b positioned opposite to each other. The first lateral surface 1413a and the second lateral surface 1413b may extend in a direction parallel to the short lateral side 800b of the supporting plate 800.

According to an embodiment, the first lateral surface 1413a and the second lateral surface 1413b may be formed to be inclined. The lateral side 1413 may be formed so that the first lateral surface 1413a and the second lateral surface 1413b become closer to each other as they move away from the first side 1411 of the bar 1410. For example, the first lateral surface 1413a and the second lateral surface 1413b may be formed to be inclined inward as they approach the second side 1412 from the first side 1411 of the bar 1410.

According to an embodiment, the first lateral surface 1413a and/or the second lateral surface 1413b may be formed to extend from the first side 1411 by a predetermined length in a vertical direction and then may be inclined as they approach the second side 1412 while passing the predetermined length.

According to an embodiment, the first lateral surface 1413a or the second lateral surface 1413b may be formed of a curved surface.

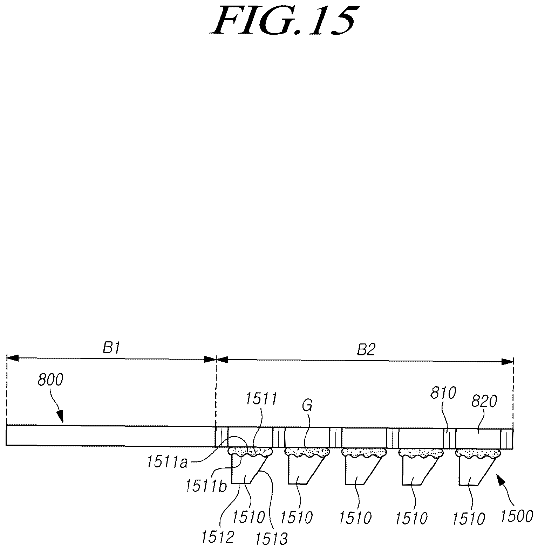

Referring to FIG. 15, at least one bar 1510 (e.g., the bar 910 of FIG. 7) constituting the supporting structure 1500 (e.g., the supporting structure 900 of FIG. 7) according to an embodiment may have a rough surface (or a textured surface) that faces the rear side of the flexible display (e.g., the flexible display 700 of FIG. 7). For example, the first side 1511 (or the upper side) of the at least one bar 1510 may be formed as a rough surface (or a textured surface). For example, a center portion (e.g., the center portion 915 of FIG. 9) of the first side 1511 of the at least one bar 1510 may be formed of a rough surface (or a textured surface), but is not limited thereto. Here, the rough surface (or the textured surface) may be formed in a regular or irregular pattern in which the protruding portion 1511a and the concave portion 1511b are alternately arranged, but is not limited thereto.

According to an embodiment, as the first side 1511 in contact with the supporting plate (e.g., the supporting plate 800 of FIG. 7) of the at least one bar 1510 is roughened or textured, the adhesive surface area may increase and the adhesive force may be strengthened.

According to various embodiments, the rough surface structure (or the textured surface structure) of the bar 1510 described with reference to FIG. 15 may be applied to bars according to various embodiments described in the present disclosure. According to various embodiments, the bar 1510 may have a second side 1512 (e.g., a lower surface) or a lateral side 1513 of various shapes.

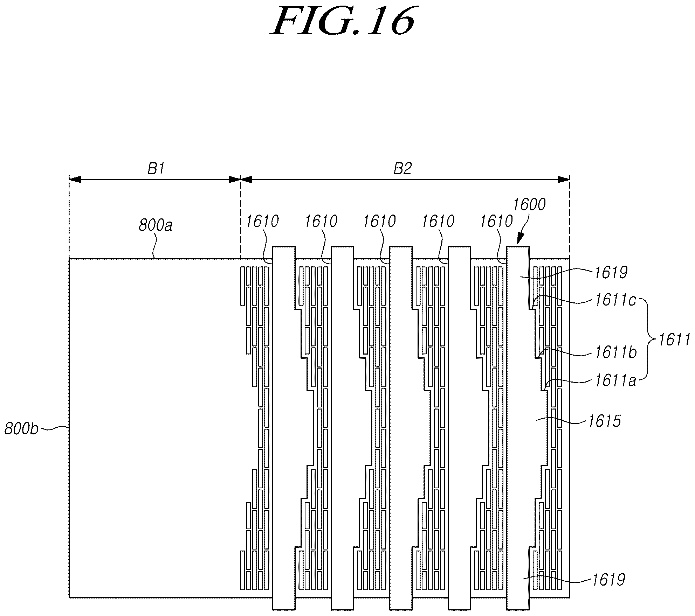

Referring to FIG. 16, at least one bar 1610 (e.g., the bar 910 of FIG. 7) constituting the supporting structure 1600 (e.g., the supporting structure 900 of FIG. 7) according to an embodiment may be formed with at least one stepped jaw 1611 whose width decreases from the center portion 1615 toward the end portion 1619. For example, the width of the at least one bar 1610 may decrease from the center portion 1615 toward the end portion 1619, and may stepwise decrease. For example, the supporting structure 1600 may include, but is not limited to, three stepped jaws 1611a, 1611b, and 1611c, creating a width difference between the center portion 1615 and the end portion 1619.

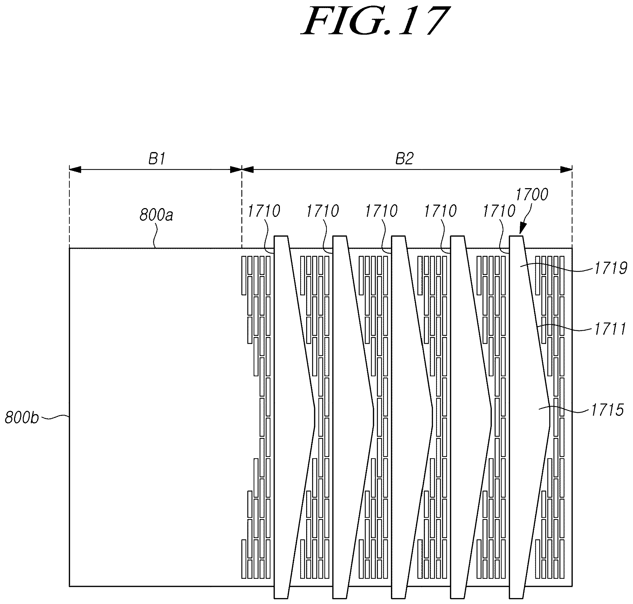

Referring to FIG. 17, at least one bar 1710 (e.g., the bar 910 of FIG. 7) constituting the supporting structure 1700 (e.g., the supporting structure 900 of FIG. 7) according to an embodiment may be formed so that the width is decreased by a predetermined slope as it approaches the end portion 1719 from the center portion 1715. For example, the width of the at least one bar 1710 may gradually decrease from the center portion 1715 toward the end portion 1719. For example, the at least one bar 1710 may have an inclined surface 1711 whose width gradually decreases from the center portion 1715 toward the end portion 1719.

According to various embodiments, the supporting structure (e.g., the supporting structure 900 of FIG. 7) of the electronic device (e.g., the electronic device 101 of FIG. 2) may include a combination of one or more of bars having various shapes illustrated in FIGS. 8 to 17.

According to an embodiment, an electronic device (e.g., the electronic device 101 of FIG. 2) may comprise a flexible display (e.g., the flexible display 700 of FIG. 7) including a flat area (e.g., the flat area A1 of FIG. 7) and a bending area (e.g., the bending area A2 of FIG. 7) configured to move along the curved surface (e.g., the curved surface 250 of FIG. 4) and a supporting structure (e.g., the supporting structure 900 of FIG. 7) including a plurality of bars spaced apart from each other on a rear side of the bending area A2 of the flexible display 700. A width of a center portion (e.g., the center portion 915 of FIG. 9) of at least one bar from among the plurality of bars may be larger than a width of an end portion (e.g., the end portion 919 of FIG. 9) of the at least one bar.

According to an embodiment, the at least one bar 910 may comprise a varying width structure that has a width that gradually decreases from the center portion 915 toward the end portion 919.

According to an embodiment, the at least one bar (e.g., the bar 1610 of FIG. 16) may comprise at least one stepped jaw (e.g., the jaw 1611 of FIG. 16) such that a width of the at least one bar decreases from the center portion (e.g., the center portion 1615 of FIG. 16) toward the end portion (e.g., the end portion of FIG. 16).

According to an embodiment, the at least one bar 910 may comprise a symmetrical structure with respect to the center portion 915.

According to an embodiment, the electronic device may further comprise a supporting plate 800 comprising a first surface facing a rear side of the flexible display 700 and a second surface having at least a portion provided to contact the supporting structure 900.

According to an embodiment, the supporting plate 800 may comprise a plurality of holes or slits (e.g., the hole or slit 811 of FIG. 8) in a portion other than a portion adjacent to the plurality of bars in an area corresponding to the bending area A2 of the flexible display 700.

According to an embodiment, in the supporting plate 800, within an area corresponding to the bending area A2 of the flexible display 700, a support area 820 that contacts the plurality of bars and a stretchable area comprising a plurality of holes or slits 811 are alternately arranged.

According to an embodiment, the supporting plate 800 may comprise a support area 820 to which the at least one bar 910 is adhered. A shape of the support area 820 may correspond to a shape of a surface of the at least one bar 910 is adhered.

According to an embodiment, the at least one bar 1510 may comprise a rough surface that faces towards the rear side of the flexible display 700.

According to an embodiment, the plurality of bars may comprise a first bar (e.g., the first bar 910a of FIG. 10) and a second bar (e.g., the second bar 910b of FIG. 10) adjacent to the first bar 910a. A portion of a surface of the first bar 910a facing the second bar 910b is an inclined surface 913 or 1313.

According to an embodiment, the inclined surface 913 or 1313 may be a flat surface 913 or a curved surface 1313.

According to an embodiment, the plurality of bars may comprise a first bar 910a and a second bar 910b adjacent to the first bar 910a. At the center portion of the first bar, a width of a first surface 911 facing the flexible display 700 is larger than a width of a second surface 912 opposite to the first surface 911.

According to an embodiment, a display assembly 70 of an electronic device 101 may comprise a flexible display 700 comprising a flat area A1 and a bending area A2 selectively moving along the curved surface 250 and a supporting plate 800 comprising a first surface on a rear side of the bending area A2, a portion corresponding to the bending area A2 comprising a stretchable area 810 and a support area 820 that are alternately arranged. The stretchable area 810 may comprise a plurality of holes or slits. The support area 820 may have a central portion with a larger width than a width of an end portion.

According to an embodiment, the stretchable area 810 may have a center portion 915 with a smaller width than a width of an end portion 919.

According to an embodiment, the display assembly may further comprise a supporting structure 900 including a bar 910 disposed in the support area 820.

According to an embodiment, the support area 820 may have a shape corresponding to the shape of the adhered bar 910.

According to an embodiment, a bar 910 disposed in the support area 820 may have a center portion 915 with a larger width than a width of an end portion 919.

According to an embodiment, the bar 910 disposed in the support area 820 may have a differential width structure in which a width gradually decreases from the center portion 915 toward the end portion 919.

According to an embodiment, the bar 1610 disposed in the support area 820 may be provided with at least one stepped jaw 1611 whose width decreases from the center portion 1615 to the end portion 1619.

According to an embodiment, the bar 1510 disposed in the support area 820 may have a rough surface facing the supporting plate 800.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments.

## Claims

1. An electronic device (101), comprising:
a flexible display (700) comprising a flat area and a bending area, the bending area A2) configured to move along a curved surface (250); and
a supporting structure (900, 1300, 1400, 1500, 1600, 1700) including a plurality of bars spaced apart from each other on a rear side of the bending area (A2) of the flexible display (700),
wherein a width of a center portion (915, 1615, 1715) of at least one bar from among the plurality of bars (910, 1310, 1410, 1510, 1610, 1710)is larger than a width of an end portion (919, 1619, 1719) of the at least one bar.

2. The electronic device of claim 1,
wherein the at least one bar (910, 1710) comprises a varying width structure that has a width that gradually decreases from the center portion (915, 1715) toward the end portion (919, 1719).

3. The electronic device of claim 1,
wherein the at least one bar (1610) comprises at least one stepped jaw (1611) such that a width of the at least one bar decreases from the center portion (1615) toward the end portion (1619).

4. The electronic device of claim 1,
wherein the at least one bar (910, 1610, 1710)comprises a symmetrical structure with respect to the center portion (915, 1615, 1715).

5. The electronic device of claim 1, further comprising
a supporting plate (800) comprising a first surface facing a rear side of the flexible display (700) and a second surface having at least a portion provided to contact the supporting structure (900, 1300, 1400, 1500, 1600, 1700).

6. The electronic device of claim 5,
wherein in the supporting plate (800), within an area corresponding to the bending area (A2) of the flexible display (700), a support area (820) that contacts the plurality of bars and a stretchable area comprising a plurality of holes or slits (811) are alternately arranged.

7. The electronic device of claim 5,
wherein the supporting plate (800) comprises a support area (820) to which the at least one bar (910, 1310, 1410, 1510, 1610, 1710) is adhered, and
wherein a shape of the support area (820) corresponds to a shape of a surface of the at least one bar (910, 1310, 1410, 1510, 1610, 1710) is adhered.

8. The electronic device of claim 1,
wherein the at least one bar (1510) comprises a rough surface that faces towards the rear side of the flexible display (700).

9. The electronic device of claim 1,
wherein the plurality of bars comprise a first bar (910a) and a second bar (910b) adjacent to the first bar (910a), and
wherein a portion of a surface of the first bar (910a) facing the second bar (910b) is a flat inclined surface or a curved inclined surface (913, 1313, 1413, 1513).

10. The electronic device of claim 1,
wherein the plurality of bars comprise a first bar (910a) and a second bar (910b) adjacent to the first bar (910a), and
wherein, at the center portion of the first bar (910a), a width of a first surface (911) facing the flexible display (700) is larger than a width of a second surface (912) opposite to the first surface (911).

11. A display assembly (70) of an electronic device (101), comprising:
a flexible display (700) comprising a flat area (A1) and a bending area (A2), the bending area (A2) configured to move along a curved surface (250); and
a supporting plate (800) comprising a first surface on a rear side of the bending area (A2), a portion corresponding to the bending area (A2) comprising a stretchable area (810) and a support area (820) that are alternatively arranged,
wherein the stretchable area (810) comprises a plurality of holes or slits, and
wherein the support area (820) has a central portion with a larger width than a width of an end portion.

12. The display assembly of claim 11,
wherein the stretchable area (810) has a center portion with a smaller width than a width of an end portion.

13. The display assembly of claim 11,
further comprising a supporting structure (900) including a bar (910) disposed in the support area (820).

14. The display assembly of claim 13,
wherein the support area (820) has a shape corresponding to a shape of the bar (910) to be adhered to the support area (820).

15. The display assembly of claim 13,
wherein a bar (910) disposed in the support area (820) has a center portion (915) with a larger width than a width of an end portion (919).
